# EUROPEAN PATENT SPECIFICATION

(11) **EP 0 591 930 B1**
(45) Date of publication and mention of the grant of the patent: **23.07.1997**
(21) Application number: 93116090.7
(22) Date of filing: 05.10.1993
(51) Int. Cl.: G01P 1/12, G01P 15/00

(54) **Hydroplaning detecting system**
System zur Feststellung von Aquaplanning
Système de détection d'aquaplanage

(30) Priority: 05.10.1992 JP 290759/92; 30.10.1992 JP 316331/92
(43) Date of publication of application: 13.04.1994
(73) Proprietor: HONDA GIKEN KOGYO KABUSHIKI KAISHA, Minato-ku Tokyo 107 (JP)
(72) Inventor: Kin, Keiyu, c/o Honda R & D Co., Ltd., Wako-shi, Saitama (JP); Sakaki, Yuji, c/o Honda R & D Co., Ltd., Wako-shi, Saitama (JP); Akuta, Yohimitsu, c/o Honda R & D Co., Ltd., Wako-shi, Saitama (JP)
(74) Representative: Prechtel, Jörg, Dipl.-Phys. Dr.

(56) References cited:
- GB-A- 2 084 675
- PATENT ABSTRACTS OF JAPAN, vol. 17, no. 457 (P-1597) 20 August 1993; & JP-A-51 007 257
- PATENT ABSTRACTS OF JAPAN, vol. 11, no. 335 (P-632) 4 November 1987; & JP-A-62 119 462

## Description

The present invention relates to a system for detecting a hydroplaning phenomenon on a motor vehicle by monitoring the rotational speed of a road wheel, i.e. a tire, of the motor vehicle, and more particularly to a system for detecting a hydroplaning effect on a motor vehicle with increased sensitivity while reducing detection errors.

### Description of the Related Art:

Hydroplaning that occurs with respect to motor vehicles is a phenomenon in which when a motor vehicle runs over a film of water such as a pool of water on a road above a high speed of 80 km/hour which is depending on the type of the tires, the road wheels or tires are temporarily lifted off the road surface, resulting in an abrupt reduction in the coefficient of friction between the road wheels and the road surface. The hydroplaning effect is produced when the film of water is wedged at high speed between the road surface and the road wheels, developing a dynamic pressure which lifts the road wheels off the road surface.

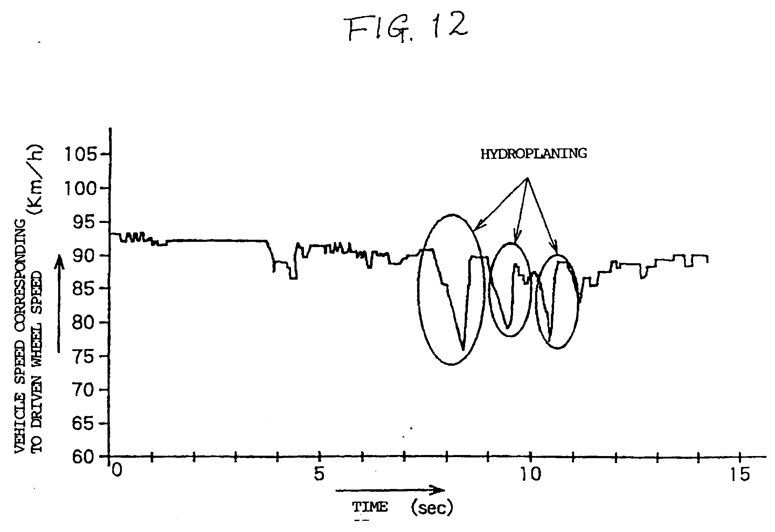

FIG. 12 of the accompanying drawings shows how the rotational speed of front driven wheels of a motor vehicle varies with time when the motor vehicle suffers hydroplaning.

The graph of FIG. 12 has a vertical axis representing the speed of travel of the motor vehicle which corresponds to the rotational speed of a driven wheel (front wheel), and a horizontal axis representing time.

Hydroplaning causes the lift in a very short period of time. During hydroplaning, the rotational speed of road wheels is sharply reduced. After the film of water disappears and the tires are brought back into contact with the road surface, the rotational speed of the road wheels recovers instantaneously.

More specifically, when the film of water is wedged between each of the road wheels and the road surface and the road wheel is lifted off the road surface under forces exerted by the film of water, the rotational speed of the road wheel abruptly drops (generally by several km/hour to several tens km/hour) due to the resistance of the film of water between the road wheel and the road surface. When the road wheel recovers its contact with the road surface, the rotational speed of the road wheel recovers quickly. In hydroplaning, therefore, the rotational speed of the road wheels varies in a sawtooth pattern which is convex downwardly. Such a rotational speed pattern is inherent in motor vehicles with rear drive wheels. With regard to motor vehicles with front drive wheels, the rotational speed of the front drive wheels may instantaneously increase and thereafter quickly recovers, depending on the torque applied to the front drive wheels.

There has been proposed a system in JP-A-5 107 257 for detecting hydroplaning based on the pattern in which the rotational speed of front wheels varies. In such a system, a typical pattern in which the rotational speed of front wheels varies upon hydroplaning is stored in a memory. A pattern in which the rotational speed of front wheels actually varies is then compared with the stored pattern to detect hydroplaning based on the degree to which the compared patterns agree with each other. There has also been proposed a system in JP-A-611 515 in which a stored typical pattern of speed variations is modified depending on the condition in which the motor vehicle runs. The modified pattern is then compared with a pattern of actual speed variations to detect hydroplaning. A threshold for determining whether hydroplaning has occurred or not is varied also depending on the condition in which the motor vehicle runs, for increasing the accuracy with which hydroplaning is detected.

Both of these documents were published after the priority date of the present application and therefore do not form part of the prior art.

If the threshold is set to a low value in the proposed systems in order to detect a very low level of hydroplaning which the driver does not recognize, then it is difficult to differentiate between a pattern of hydroplaning-induced speed variations and a pattern of speed variations caused when the motor vehicle runs over a step or a bump on the road surface. As a result, the proposed systems are subject to a high probability of causing detection errors.

It is therefore an object of the present invention to provide a hydroplaning detecting system which is capable of detecting hydroplaning with high sensitivity and accuracy, and of detecting hydroplaning only based on the fact that when a motor vehicle runs over a step or a bump or rough terrain, the rotational speeds of both front and rear road wheels thereof vary in the same pattern.

According to the present invention, there is provided a system for detecting hydroplaning with respect to a motor vehicle, comprising a reference pattern storing means for storing a predetermined typical reference pattern of variations of the rotational speed of wheels of the motor vehicle when the motor vehicle is suffering hydroplaning, comparing means for comparing a pattern of variations of the actual rotational speed of the wheels with the reference pattern supplied from the reference pattern storing means, and generating an output signal indicative of the degree to which the compared patterns are close to each other, and determining means for determining that the motor vehicle is suffering hydroplaning if the degree represented by the output signal from the comparing means is in excess of a predetermined threshold.

The system may further comprises speed detecting means for detecting the rotational speed of at least two of the wheels of the motor vehicle as the actual rotational speed, the determining means comprising means for determining that the motor vehicle is suffering hydroplaning based on the output signal from the comparing means depending on the rotational speed detected by the speed detecting means.

The detecting means may comprise a pair of sensors for detecting the rotational speeds, respectively, of left and right front wheels of the motor vehicle, the determining means comprising difference calculating means for calculating the difference between the degree to which the pattern of variations of the rotational speed of the left front wheel as detected by one of the sensors and the reference pattern are close to each other and the degree to which the pattern of variations of the rotational speed of the right front wheel as detected by one of the sensors and the reference pattern are close to each other, based on the output signal from the comparing means, and means for determining that the motor vehicle is suffering hydroplaning if the difference calculated by the difference calculating means is in excess of a predetermined difference.

The detecting means may comprise a pair of sensors for detecting the rotational speeds, respectively, of front and rear wheels of the motor vehicle, the determining means comprising means for, if the degree to which the pattern of variations of the rotational speed of the front wheels when the front wheels run over a given point and the predetermined pattern are close to each other is in excess of the predetermined threshold, monitoring the pattern of variations of the rotational speed of the rear wheels when the rear wheels run over the given point for determining whether the motor vehicle is suffering hydroplaning.

The determining means may comprise means for generating an output signal indicating that the motor vehicle is suffering hydroplaning if the degree to which the pattern of variations of the rotational speed of the rear wheels when the rear wheels run over the given point and the predetermined pattern are close to each other is smaller than a predetermined threshold.

Alternatively, the determining means may further comprise pattern storing means for temporarily storing the pattern of variations of the rotational speed of the front wheels at the time the degree to which the pattern of variations of the rotational speed of the front wheels when the front wheels run over the given point and the predetermined pattern are close to each other is in excess of the predetermined threshold, and means for comparing the pattern stored in the pattern storing means with the pattern of variations of the rotational speed of the rear wheels when the rear wheels run over the given point, and generating an output signal indicating that the motor vehicle is suffering hydroplaning if the degree to which the compared patterns are close to each other is lower than a predetermined degree.

The above and further objects, details and advantages of the present invention will become apparent from the following detailed description of preferred embodiments thereof, when read in conjunction with the accompanying drawings.
FIG. 1 is a schematic plan view of a motor vehicle incorporating a hydroplaning detecting system according to a first embodiment of the present invention;
FIG. 2 is a block diagram of a structural arrangement of the hydroplaning detecting system according to the first embodiment;
FIG. 3 is a block diagram of a functional arrangement of the hydroplaning detecting system according to the first embodiment;
FIG. 4 is a flowchart of an operation process of a pattern comparing means in the functional arrangement shown in FIG. 3;
FIGS. 5(a) through 5(d) are diagrams showing the manner in which the pattern comparing means in the functional arrangement shown in FIG. 3 operates;
FIG. 6 is a flowchart of an operation process of a determining means in the functional arrangement shown in FIG. 3;
FIG. 7 is a graph illustrating the manner in which the rotational speed of front drive wheels of a motor vehicle varies with time when the motor vehicle suffers hydroplaning;
FIG. 8 is a block diagram of a functional arrangement of a hydroplaning detecting system according to a second embodiment of the present invention;
FIG. 9 is a flowchart of an operation process of a determining means in the functional arrangement shown in FIG. 8;
FIGS. 10(a) through 10(d) are timing charts of various signals in the hydroplaning detecting system according to the second embodiment;
FIG. 11 is a block diagram of a functional arrangement of a hydroplaning detecting system according to a third embodiment of the present invention; and
FIG. 12 is a graph showing the manner in which the rotational speed of front driven wheels of a motor vehicle varies with time when the motor vehicle undergoes hydroplaning.

When motor vehicles with front drive wheels, including four-wheel-drive motor vehicles and motor vehicles with front and rear wheels selectively operable as drive wheels, suffer hydroplaning, the rotational speed of the front driven wheels varies depending on the rotational speed of the engine (the output torque of the engine) at the time.

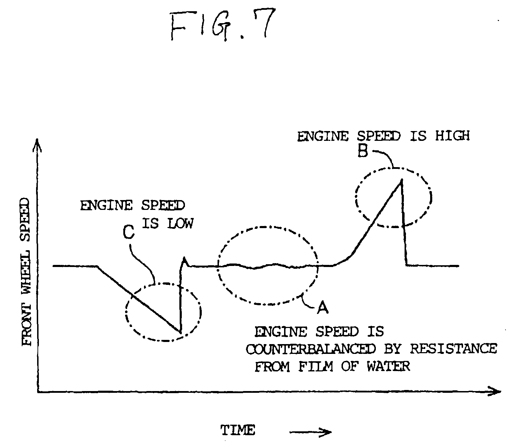

FIG. 7 illustrates the manner in which the rotational speed of front drive wheels of a motor vehicle varies with time when the motor vehicle suffers hydroplaning. The graph shown in FIG. 7 has a vertical axis representing the rotational speed of the front drive wheels and a horizontal axis representing time.

When the rotational speed of the engine (the output torque of the engine) is substantially counterbalanced by the resistance imposed by a film water beneath the front drive wheels, the rotational speed of the front drive wheels remains substantially unchanged as indicated by a substantially flat curve (see the region A in FIG. 7). When the motor vehicle is subjected to hydroplaning, the rotational speed of the front drive wheels increases (see the region B in FIG. 7) because the coefficient of friction between the wheels and the road surface is usually reduced.

When the motor vehicle is subjected to hydroplaning while it is being decelerated, i.e., while the output torque of the engine is being lowered, the rotational speed of the front drive wheels is reduced (see the region C in FIG. 7).

Insofar as the front wheels are drive wheels, it is necessary to modify a reference waveform, i.e., a typical pattern of speed variations upon hydroplaning, depending on the various conditions including the rotational speed of the engine (the output torque of the engine) and the vehicle speed. A control process of modifying such a reference waveform is however complex to carry out.

On motor vehicles with front and rear wheels selectively operable as drive wheels, one of reference waveforms has to be selected depending on the present mode in which the motor vehicle is running. A control process of selecting a reference waveform is also complex to carry out.

When a motor vehicle undergoes hydroplaning, left and right front wheels are generally subjected to different resistances from the film of water. It has been confirmed that upon hydroplaning, the rotational speeds of respective left and right front wheels vary according to different waveforms or patterns, respectively.

It has also been found out that the difference between the rotational speeds of front wheels of a motor vehicle with front drive wheels is larger than the difference between the rotational speeds of front wheels of a motor vehicle with rear drive wheels.

According to a first embodiment of the present invention, hydroplaning is accurately detected based on the fact that the rotational speeds of front wheels of a motor vehicle differ from each other when the motor vehicle suffers hydroplaning.

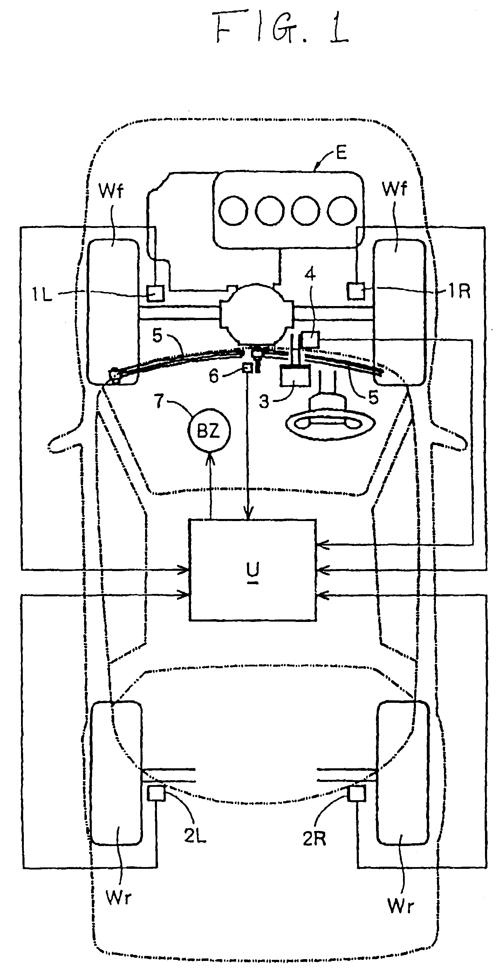

FIG. 1 schematically shows a motor vehicle incorporating a hydroplaning detecting system according to a first embodiment of the present invention.

The motor vehicle shown in FIG. 1 has front drive wheels. However, the hydroplaning detecting system according to the first embodiment may be incorporated in a motor vehicle with rear drive wheels or a four-wheel-drive motor vehicle.

As shown in FIG. 1, the motor vehicle has left and right front wheels Wf which are drive wheels drivable by an engine E, and left and right rear wheels Wr which are driven wheels. The left and right front drive wheels Wf are associated with respective sensors 1L, 1R for detecting the rotational speeds, respectively, of the front drive wheels Wf. Similarly, the left and right rear driven wheels Wr are associated with respective sensors 2L, 2R for detecting the rotational speeds, respectively, of the rear driven wheels Wr.

The motor vehicle has a brake pedal 3 coupled to a brake switch 4 that is turned on when no brake is applied to the motor vehicle. The motor vehicle also has a wiper 5 associated with a wiper switch 6 that is turned on when the wiper 5 is in operation.

The sensors 1L, 1R, 2L, 2R are electrically connected to supply detected output signals thereof to a hydroplaning detector U. The brake switch 4 and the wiper switch 6 are also electrically connected to supply signals indicative of their operation to the hydroplaning detector U.

To the hydroplaning detector U, there is electrically connected a buzzer 7 which produces an audible warning sound indicating that hydroplaning is occurring or is about to occur, in response to a detected output signal from the hydroplaning detector U.

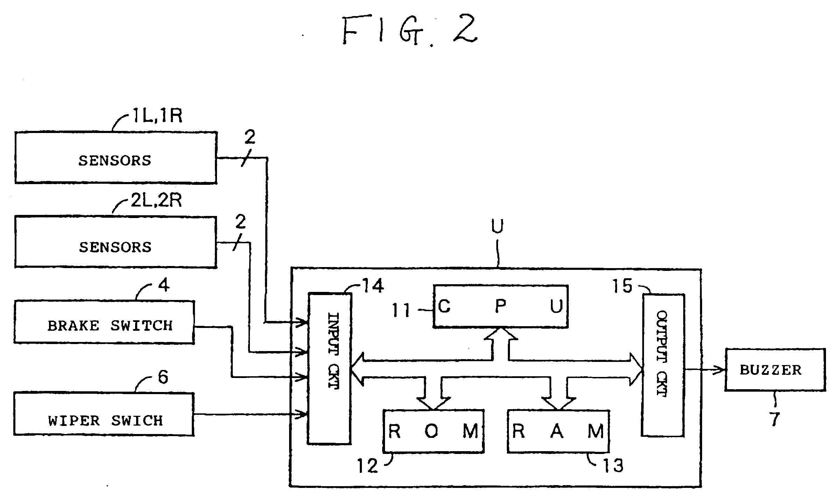

The hydroplaning detector U has a structural arrangement as shown in FIG. 2.

The hydroplaning detector U comprises a CPU 11 capable of high-speed processing operations, a ROM 12 which stores a processing program and various data, a RAM 13 for temporarily storing detected signals and processed results, an input circuit 14 electrically connected to the sensors 1L, 1R, 2L, 2R, the brake switch 4, and the wiper switch 6, and an output circuit 15 connected to the buzzer 7.

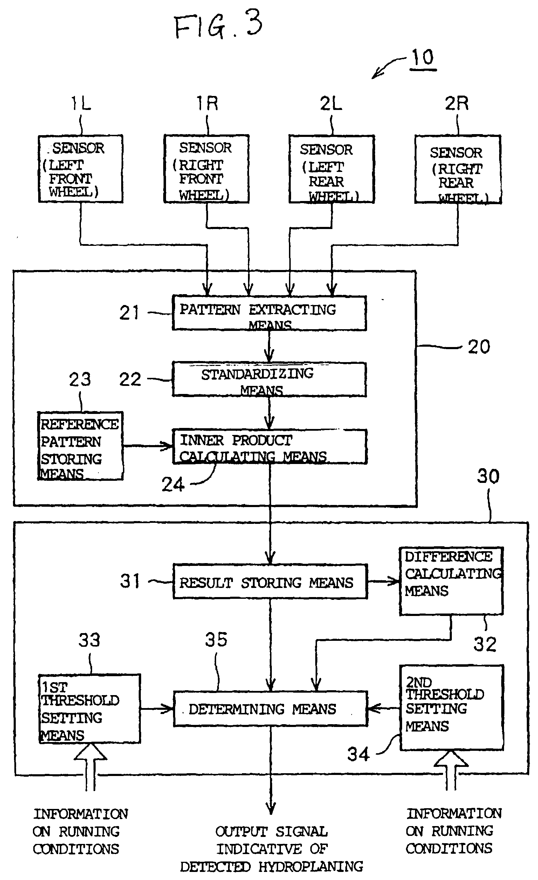

FIG. 3 shows a functional arrangement of the hydroplaning detecting system, generally designated by the reference numeral 10, according to the first embodiment of the present invention. The hydroplaning detecting system 10 has its functions performed by the hydroplaning detector U shown in FIG. 2.

The hydroplaning detecting system 10 comprises a pattern comparing means 20 for determining the degree to which a pattern of variations of the rotational speed of each of the wheels is close to or approximates a typical reference pattern of speed variations upon hydroplaning, and a determining means 30 for detecting hydroplaning based on approximation degree data outputted from the pattern comparing means 20.

The pattern comparing means 20 comprises a pattern extracting means 21, a standardizing means 22, a reference pattern storing means 23 for storing a typical reference pattern of speed variations upon hydroplaning, and an internal product calculating means 24.

The determining means 30 comprises a result storing means 31 for temporarily storing the calculated inner product with respect to each wheel, a difference calculating means 32 for calculating the difference between the calculated inner products with respect to the left and right front wheels Wf, a first threshold setting means 33 for setting a pattern determining threshold, a second threshold setting means 34 for setting a difference determining threshold, and a hydroplaning determining means 35.

The pattern determining threshold set by and supplied from the first threshold setting means 33 may be varied based on information from the brake switch 4, information from the wiper switch 6, and information relative to running conditions such as vehicle speed information detected by a vehicle speed detector (not shown).

The difference determining threshold set by and supplied from the second threshold setting means 34 may be varied based on information relative to running conditions.

The wheel speeds detected by the respective sensors 1L, 1R, 2L, 2R are supplied to the pattern extracting means 21, which extracts features of the waveforms of varying wheel speeds. The extracted features are then standardized by the standardizing means 22.

The inner product calculating means 24 calculates the inner product of actual patterns of speed variations which are standardized by and outputted from the standardizing means 22 and the reference pattern supplied from the reference pattern storing means 23. The calculated internal product serves as a parameter of the degree to which the actual pattern and the reference pattern are close to each other or agree with each other.

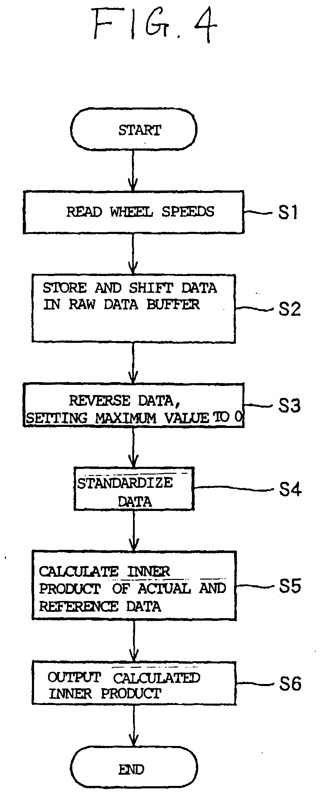

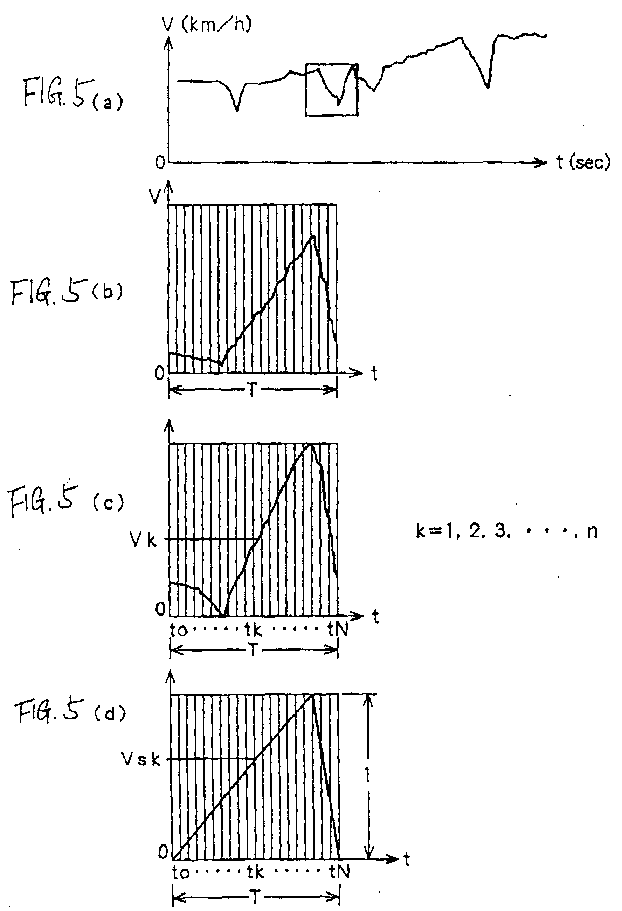

FIG. 4 shows an operation process of the pattern comparing means 20, and FIGS. 5(a) through 5(d) illustrate the manner in which the pattern comparing means 20 operates.

As shown in FIG. 4, pattern comparing means 20 reads the wheel speeds detected by the respective sensors 1L, 1R, 2L, 2R at predetermined intervals of time (e.g., several tens millimeters) in a step S1 (see FIG. 5(a)).

Then, the pattern comparing means 20 stores n data items v1, v2, v3, ···, vn that are read in a raw data buffer, and shifts them by one data item each time a new data item is read in a step S2.

The pattern comparing means 20 reverses sampled data stored in the raw data buffer such that the maximum value thereof becomes 0 in a step S3 (see FIG. 5(b)).

In a step S4, the pattern comparing means 20 standardizes the maximum value of the reversed raw data based on the maximum value of the reference pattern (see FIG. 5(c)). Specifically, the maximum value of the reversed raw data, i.e., the minimum value of the raw data before being reversed, is standardized by the maximum value 1 of the reference pattern (see FIG. 5(d)), producing actual data items V1, V2, V3, ···, Vn. The pattern comparing means 20 stores actual data items V1, V2, V3, ···, Vn in an actual data buffer. The reference pattern which is used is determined beforehand using, as a reference, a waveform or pattern of speed variations that are produced when a very slight level of hydroplaning occurs.

Then, the pattern comparing means 20 calculates the inner product of the actual data items V1, V2, V3, ···, Vn and reference data items VS1, VS2, VS3, ···, VSn corresponding to the reference pattern in a step S5. More specifically, the pattern comparing means 20 regards the reference data and the actual data as two vectors, respectively, each having n components, and calculates the inner product VS1 ¥ V1 + VS2 ¥ V2 + VS3 ¥ V3 + ··· + VSn ¥ Vn of the vectors. Thereafter, the pattern comparing means 20 outputs the calculated inner product in a step S6.

Generally, the inner product of two vectors is maximum when the vectors are identical to each other, and is reduced as the degree to which the vectors agree with each other is reduced. Therefore, if the inner product, used as a parameter, is larger, then it is determined that the pattern of variations of the actually detected rotational speed of a wheel is better coincident with the pattern of variations of the rotational speed of the wheel upon hydroplaning. Conversely, if the inner product is smaller, then it is determined that these patterns are not coincident with each other.

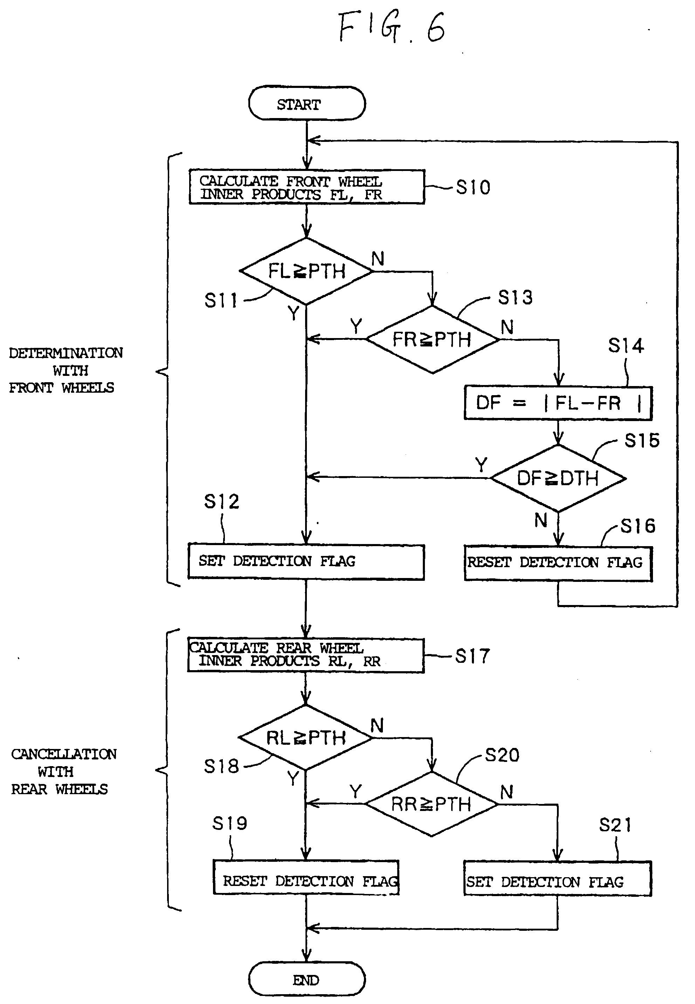

FIG. 6 shows an operation process of the determining means 30.

The determining means 30 controls the inner product calculating means 24 to calculate, in a step S10, the inner product (hereinafter referred to as a "left front wheel inner product") FL of the pattern of variations of the rotational speed of the left front wheel Wf and the reference pattern, and the inner product (hereinafter referred to as a "right front wheel inner product") FR of the pattern of variations of the rotational speed of the right front wheel Wf and the reference pattern. Then, the determining means 30 compares the left front wheel inner product FL with a pattern determining threshold PTH set by the first threshold setting means 33 in a step S11. If the left front wheel inner product FL is equal to or greater than the pattern determining threshold PTH, i.e., if the degree to which the pattern of variations of the rotational speed of the left front wheel Wf is close to or coincident with the reference pattern is high, then the determining means 30 sets a detection flag indicative of detection of hydroplaning on the front wheels in a step S12.

Similarly, the determining means 30 compares the right front wheel inner product FR with the pattern determining threshold PTH in a step S13. If the right front wheel inner product FR is equal to or greater than the pattern determining threshold PTH, then the determining means 30 sets the detection flag indicative of detection of hydroplaning on the front wheels in the step S12.

If both the left and right front wheel inner products FL, FR are smaller than the pattern determining threshold PTH in the steps S11, S13, then the determining means 30 calculates the absolute value DF of the difference between the left front wheel inner product FL and the right front wheel inner product FR in a step S14, and compares the absolute value DF with a difference determining threshold DTH set by the difference threshold setting means 34 in a step S15. If the absolute value DF is equal to or greater than the difference determining threshold DTH, then the determining means 30 sets the detection flag indicative of detection of hydroplaning on the front wheels in the step S12. If the absolute value DF is smaller than the difference determining threshold DTH, then the determining means 30 resets the detection flag in a step S16, after which the inner product calculating means 24 calculates new front wheel inner products FL, FR.

When the detection flag is set in the step S12, the determining means 30 controls the inner product calculating means 24 to calculate, in a step S17, the internal product (hereinafter referred to as a "left rear wheel inner product") RL of the pattern of variations of the rotational speed of the left rear wheel Wr and the reference pattern, and the inner product (hereinafter referred to as a "right rear wheel inner product") RR of the pattern of variations of the rotational speed of the right rear wheel Wr and the reference pattern. Then, the determining means 30 compares the left rear wheel inner product RL with the pattern determining threshold PTH in a step S18. If the left rear wheel inner product FL is equal to or greater than the pattern determining threshold PTH, then the determining means 30 resets the detection flag indicative of detection of hydroplaning on the front wheels in a step S19.

Similarly, the determining means 30 compares the right rear wheel inner product RR with the pattern determining threshold PTH in a step S20. If the right rear wheel inner product RR is equal to or greater than the pattern determining threshold PTH, then the determining means 30 resets the detection flag indicative of detection of hydroplaning on the front wheels in the step S19.

If both the left and right rear wheel inner products RL, RR are smaller than the pattern determining threshold PTH in the steps S18, S20, then the determining means 30 sets the detection flag indicative of detection of hydroplaning on the front wheels in a step S21.

Therefore, when hydroplaning is detected based on the front wheel inner products, then it is checked whether the detected hydroplaning is real or not based on the rear wheel inner products.

More specifically, when the motor vehicle runs over a step or the like, for example, the rotational speed of the wheels tends to vary in a pattern similar to the reference pattern. At this time, the rotational speeds of the front and rear wheels vary in the same pattern. Thus, after the detection flag is set based on the front wheel internal products FL, FR, if the rear wheel inner products RL, RR are equal to or greater than the pattern determining threshold PTH, then the detection flag is reset, i.e., hydroplaning is not detected. Therefore, the hydroplaning detecting system can detect hydroplaning with high accuracy.

Even when the front wheel inner products FL, FR are smaller than the pattern determining threshold PTH, i.e., the degree to which the actual and reference patterns coincide with each other is low, the detection flag is set if the difference between the variations of the rotational speeds of the left and right front wheels is large. Consequently, certain forms of hydroplaning which are inherent in motor vehicles with front drive wheels can accurately be detected.

In this embodiment, the degree to which the actual and reference patterns coincide with each other is determined based on the calculated inner products. However, the degree to which the actual and reference patterns coincide with each other may be determined by the convolution of integrals of the actual and reference patterns.

The detected hydroplaning is indicated by an audible sound produced by the buzzer 7 in the above embodiment. However, in addition to the audible warning issued by the buzzer 7, operation of a cruise control unit on the motor vehicle may be automatically canceled or a throttle control unit on the motor vehicle may be automatically operated to close the throttle valve in response to the detection of hydroplaning. The inner products or integrals may be calculated by a dedicated high-speed filter arrangement rather than the CPU.

As described above, the hydroplaning detecting system according to the first embodiment produces an output signal indicative of detected hydroplaning when the difference between the degree to which the pattern of variations of the rotational speed of the left front wheel and the reference pattern are close to each other or coincide with each other and the degree to which the pattern of variations of the rotational speed of the right front wheel and the reference pattern are close to each other or coincide with each other exceeds a predetermined threshold. Therefore, the hydroplaning detecting system can accurately detect hydroplaning on motor vehicles with front drive wheels.

The threshold for determining hydroplaning based on the degree to which the pattern of variations of the rotational speed of each of the wheels and the reference pattern are close to each other or coincide with each other may be increased to reduce erroneous detection of hydroplaning based on variations of the rotational speed of any of the wheels, and hydroplaning is detected based on the difference between the degrees to which the pattern of variations of the rotational speed of the wheels and the reference pattern are close to each other or coincide with each other. Thus, the accuracy with which hydroplaning is detected may be increased.

Hydroplaning on motor vehicles with front drive wheels can accurately be detected because the difference between the rotational speeds of the left and right front wheels is significant upon hydroplaning.

A hydroplaning detecting system according to a second embodiment of the present invention will be described below.

In the second embodiment, the hydroplaning detecting system is incorporated in a motor vehicle with rear drive wheels. The motor vehicle has front driven wheels and rear drive wheels, and sensors, similar to the sensors 1L, 1R in FIG. 1, associated with the left and right front wheels for detecting the rotational speeds thereof, and sensors, similar to the sensors 2L, 2R in FIG. 1, associated with the left and right rear wheels for detecting the rotational speeds thereof.

The motor vehicle also has a brake switch and a wiper switch, which are identical to the brake switch 4 and the wiper switch 6 shown in FIG. 1. Detected output signals from the sensors 1L, 1R, 2L, 2R are supplied to a hydroplaning detector, identical to the hydroplaning detector U shown in FIG. 2, and signals indicative of operation of the brake and wiper switches are also supplied to the hydroplaning detector. Therefore, the hydroplaning detecting system according to the second embodiment has a structural arrangement which is identical to the structural arrangement shown in FIG. 2.

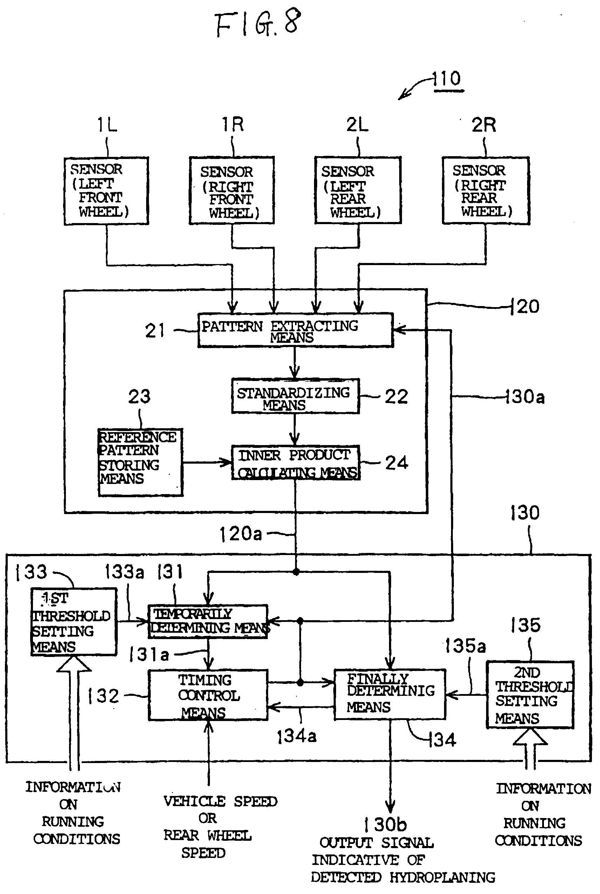

FIG. 8 is a functional arrangement of the hydroplaning detecting system according to the second embodiment.

The hydroplaning detecting system, generally designated by the reference numeral 110 in FIG. 8, comprises pattern comparing means 120 for determining the degree to which a pattern of variations of the rotational speed of each of the wheels is close to or approximates a typical reference pattern of speed variations upon hydroplaning, and a determining means 130 for detecting hydroplaning based on approximation degree data outputted from the pattern comparing means 120.

The pattern comparing means 120 comprises, as with the pattern comparing means 20 according to the first embodiment, a pattern extracting means 21, a standardizing means 22, a reference pattern storing means 23 for storing a typical reference pattern of speed variations upon hydroplaning, and an inner product calculating means 24.

The determining means 130 comprises a temporarily determining means 131 for temporarily determining the generation of hydroplaning based on the degree to which the pattern of variations of the rotational speed of the front wheels is close to or coincident with the reference pattern, a first threshold setting means 133 for setting a temporarily determining threshold, a timing control means 132 for indicating a time to effect a final determination with the rear wheels based on a temporarily determined output signal 131a from the temporarily determining means 131, a finally determining means 134 for finally determining whether hydroplaning is occurring or not based on the degree to which the pattern of variations of the rotational speed of the rear wheels is close to or coincident with the reference pattern, and a second threshold setting means 135 for setting a finally determining threshold.

The pattern extracting means 21 normally reads detected speed signals from the sensors 1L, 1R associated with the front wheels, and alternately extracts patterns of variations of the rotational speeds of the left and right front wheels. When supplied with a rear wheel determining command 130a from the determining means 130, the pattern extracting means 21 reads detected speed signals from the sensors 2L, 2R associated with the rear wheels, and alternately extracts patterns of variations of the rotational speeds of the left and right rear wheels.

The patterns of variations of the rotational speeds of the wheels which are extracted by the pattern extracting means 21 are then standardized by the standardizing means 22. The inner product calculating means 24 calculates the internal product of the standardized actual pattern of speed variations which is supplied from the standardizing means 23 and the reference pattern, and outputs the calculated internal product as approximation degree data 120a to the determining means 130.

The temporarily determining means 131 effects a determination with the front wheels when the rear wheel determining command 130a is not supplied. The temporarily determining means 131 compares the inner product (approximation degree data) 120a supplied from the pattern comparing means 120 with a temporarily determining threshold 133a supplied from the first threshold setting means 133. If the approximation degree data 120a is in excess of the temporarily determining threshold 133a, i.e., the degree to which the actual and reference patterns are close to each other or coincident with each other is high, then the temporarily determining means 131 supplies a temporarily determined output signal to the timing control means 132.

When hydroplaning on the front wheels is detected as occurring or being about to occur at a certain point on the road surface, the timing control means 132 causes the final determining means 134 to make a final determination with the rear wheels until the rear wheels run fully past that point or a temporary determination canceling command 134a is given from the final determining means 134. The timing control means 132 has a flag means such as a flip-flop or the like that is set by the temporarily determined output signal 131a, and a rear wheel monitoring timing control means for controlling the time at which the rear wheel determining command 130a is supplied.

The period of time that elapses after the temporarily determined output signal 131a is generated until the rear wheels run past the same point is measured by a timer means which determines whether a time preset depending on the vehicle speed detected by a vehicle speed detector has elapsed or not. Alternatively, the same period of time may be measured by determining whether the motor vehicle has traveled the distance (wheelbase) between the front and rear wheels, with a travel distance counter which measures the distance traveled based on the rotational speed of the rear wheels.

The finally determining means 134 operates while being supplied with the rear wheel determining command 130a. More specifically, the finally determining means 134 compares the calculated inner product (approximation degree data) 120a with respect to the rear wheels outputted from the pattern comparing means 120 with a finally determining threshold 135a supplied from the second threshold setting means 135. If the approximation degree data 120a exceeds the finally determining threshold 135a, i.e., the degree to which the actual and reference patterns are close to each other or coincident with each other is high, then the finally determining means 134 outputs the temporary determination canceling command 134a. If the approximation degree data 120a is lower than the finally determining threshold 135a continuously while the rear wheel determining command 130a is being supplied, then the finally determining means 134 outputs an output signal 130b indicative of detected hydroplaning.

The thresholds 133a, 135a supplied from the first and second threshold setting means 133, 135 may be varied based on information from the brake switch, information from the wiper switch, and information relative to running conditions such as vehicle speed information detected by the vehicle speed detector for increasing the sensitivity with which hydroplaning can be detected while the motor vehicle is running in rain or at high speed.

The pattern comparing means 120 according to the second embodiment operates according to the same operation process as shown in FIG. 4 in the same manner as shown in FIGS. 5(a) through 5(d).

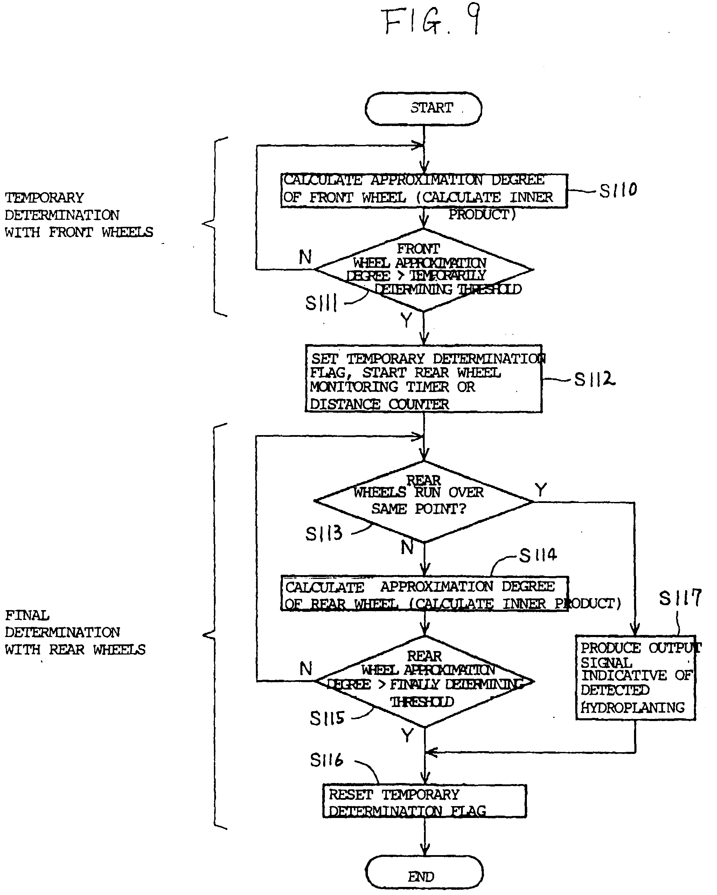

FIG. 9 shows an operation process of the determining means 130 of the hydroplaning detecting system 110 according to the second embodiment.

As shown in FIG. 9, the hydroplaning detecting system 110 effects a determination with the front wheels in steps S110, S111. If the degree to which the pattern of variations of the rotational speed of the front wheels and the reference pattern are close to each other or coincident with each other is in excess of the temporarily determining threshold in the step S111, then the determining means 130 sets a temporary determination flag and starts a timer for monitoring the rear wheels or a counter for measuring the distance traveled in a step S112.

Until the rear wheels run over the point where the temporary determination has been made with the front wheels in a step S113, the calculation of the inner product of the pattern of variations of the rotational speed of the rear wheels and the reference pattern is repeated in a step S114. If the calculated inner product (approximation degree data) 120a exceeds the finally determining threshold 135a in a step S115, i.e., if the rotational speeds of the front and rear wheels vary in the same pattern as when the motor vehicle runs over a step, then the temporary determination canceling command 134a is outputted to reset the temporary determination flag in a step S116. If the approximation degree with the rear wheels is lower than the finally determining threshold 135a continuously until the rear wheels run over the point where the temporary determination has been made, then the determining means 130 produces the output signal 130b indicating detected hydroplaning in a step S117.

The temporary determination flag is then reset in the step S116, and a temporary determination is made with the front wheels.

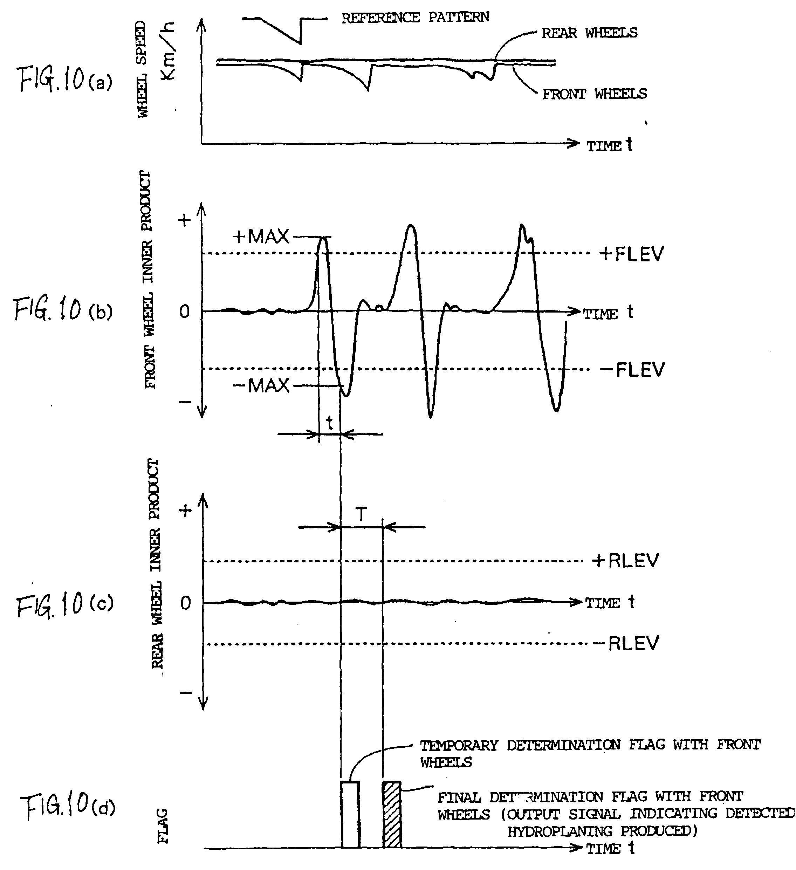

FIGS. 10(a) through 10(d) are timing charts showing the manner in which the hydroplaning detecting system 110 operates.

FIG. 10(a) shows a phenomenon of hydroplaning in which the rotational speed of the rear wheels varies slightly whereas the rotational speed of the front wheels drops and then sharply increases.

FIG. 10(b) illustrates the calculated inner product with respect to the front wheels (approximation degree data) 120a. The graph has a horizontal axis representing time and a vertical axis the inner product. Dotted lines + FLEV, - FLEV indicate temporarily determining thresholds with respect to the front wheels.

In this embodiment, when the inner product of the front wheels exceeds the positive temporarily determining threshold + FLEV, a positive maximum value + MAX is detected, and the temporary determination flag is set when the inner product of the front wheels falls below a negative maximum value - MAX whose absolute value is equal to the positive maximum value + MAX. The time in which the determination is made with the front wheels is indicated by t in FIG. 10(b).

FIG. 10(c) shows the calculated inner product with respect to the rear wheels (approximation degree data) 120a. Dotted lines + FLEV, - FLEV indicate temporarily determining thresholds with respect to the rear wheels.

The calculated inner product with respect to the rear wheels is monitored during a period of time T after the temporary determination flag is set until the rear wheels runs over the point at which the temporary determination flag has been set, i.e., the period of time corresponding to the wheelbase. The determination with the rear wheels is made in the period of time T in FIG. 10(c).

If the inner product of the rear wheels is not in excess of the finally determining threshold during the period of time T, then the final determination flag with the rear wheels is set, thus generating an output signal indicative of detected hydroplaning as shown in FIG. 10(d).

However, if the inner product of the rear wheels is in excess of the finally determining threshold during the period of time T, then it is determined that the motor vehicle is running over a step, a bump, or rough terrain, and that no hydroplaning is occurring.

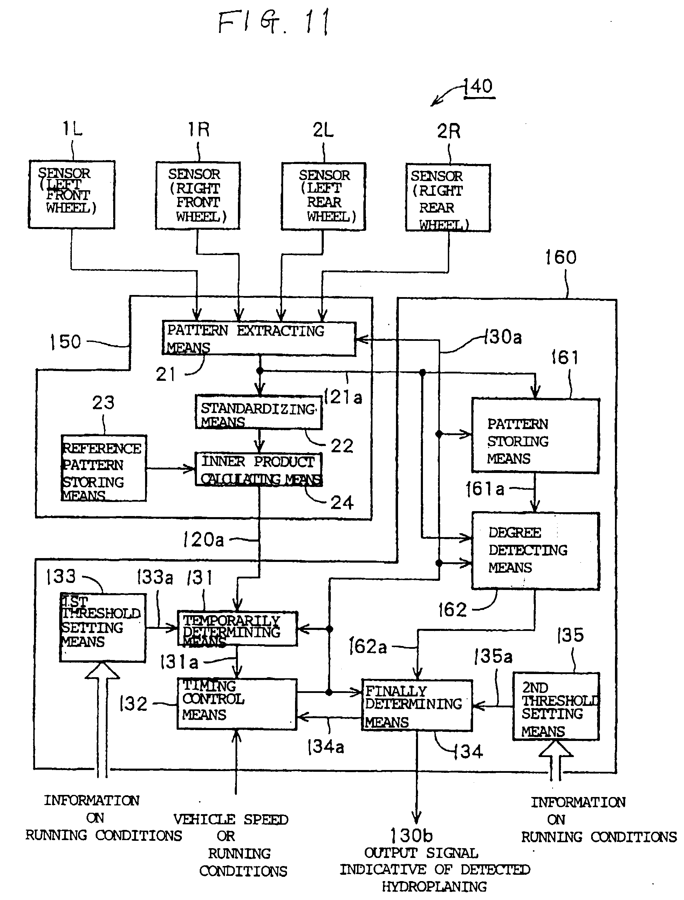

FIG. 11 shows a functional arrangement of a hydroplaning detecting system 140 according to a third embodiment of the present invention, which is a modification of the hydroplaning detecting system 110 according to the second embodiment.

The hydroplaning detecting system 140 comprises a pattern comparing means 150 and a determining means 160.

The pattern comparing means 150 is of the same functional arrangement as shown in FIG. 8.

The determining means 160 includes a pattern storing means 161 for storing a pattern of variations of the rotational speed of the front wheels, and a degree detecting means 162 for detecting the degree to which the patterns of variations of the rotational speeds of the front and rear wheels coincide with each other. The other details of the determining means 160 are the same as those of the determining means 130 shown in FIG. 8.

The pattern storing means 161 stores updated pattern data 121a successively supplied from the pattern extracting means 21 which are indicative of patterns of variations of the rotational speed of the respective front wheels, and stops storing the pattern data and temporarily stores the patterns of variations of the rotational speed of the respective front wheels at the time when the rear wheel determining command 130a is outputted.

In response to the rear wheel determining command 130a, the degree detecting means 162 detects the degree to which pattern data 161a stored in the pattern storing means 161 is close to or coincident with the pattern data 121a supplied from the pattern extracting means 21 which are indicative of patterns of variations of the rotational speed of the respective rear wheels, and supplies data 162a representative of the detected degree to the finally determining means 134.

Therefore, when a temporary determination is made with the front wheels, the hydroplaning detecting system 140 compares the pattern of variations of the rotational speed of the front wheels at the time the temporary determination is made with the pattern of variations of the rotational speed of the rear wheels at the time the rear wheels run over the point where temporary determination has been made with the front wheels. If the degree to which the compared patterns coincide with each other is high, then the hydroplaning detecting system 140 determines that the motor vehicle is running over a step, a bump, or rough terrain, and cancels the temporary determination. If the degree to which the compared patterns coincide with each other is low, then the hydroplaning detecting system 140 generates an output signal indicative of hydroplaning that is occurring or about to occur.

In the first and second embodiments, the degree to which the actual and reference patterns coincide with each other is determined based on the calculated inner products. However, the degree to which the actual and reference patterns coincide with each other may be determined by the convolution of integrals of the actual and reference patterns.

The pattern comparing means 120, 140 first effect comparisons with respect to the front wheels and then effect comparisons with respect to the rear wheels. However, the pattern comparing means 120, 140 may effect comparisons with respect to all the wheels at all times.

In the second and third embodiments, after a temporary determination has been made with the front wheels, a determination is made with the rear wheels continuously until the rear wheels run over the point where the temporary determination has been made with the front wheels. However, a final determination may be made based on only the pattern of variations of the rotational speed of the rear wheels at the time the rear wheels run over the point where the temporary determination has been made with the front wheels.

In each of the above embodiments, the detected hydroplaning is indicated by an audible sound produced by the buzzer 7. However, in addition to the audible warning issued by the buzzer 7, operation of a cruise control unit on the motor vehicle may be automatically canceled or a throttle control unit on the motor vehicle may be automatically operated to close the throttle valve in response to the detection of hydroplaning. The inner products or integrals may be calculated by a dedicated high-speed filter arrangement rather than the CPU.

In each of the hydroplaning detecting systems according to the second and third embodiments, as described above, if the degree to which the pattern of variations of the rotational speed of the front wheels and the reference pattern are close to each other or coincident with each other is in excess of the temporarily determining threshold, then the determining means monitors the pattern of variations of the rotational speed of the rear wheels when the rear wheels run over the point where the temporary determination has been made, and determines that hydroplaning is taking place. Therefore, even when the pattern of variations of the rotational speed of the wheels at the time the motor vehicle runs over a step or a bump is similar to the reference pattern, the hydroplaning detecting system determines that the motor vehicle is running over a step or a bump if the pattern of variations of the rotational speed of the rear wheels is similar to the pattern of variations of the rotational speed of the front wheels, and determines that the motor vehicle is suffering hydroplaning if the rotational speed of the rear wheels varies slightly or is substantially free of any variations.

Therefore, the hydroplaning detecting system can detect only hydroplaning accurately as distinguished from other disturbances.

The hydroplaning detecting system according to the second embodiment thus determines that the motor vehicle is suffering hydroplaning when the degree to which the pattern of variations of the rotational speed of the rear wheels and the reference pattern coincide with each other is lower than the predetermined threshold, i.e., the degree of coincidence between the actual and reference patterns is low, when the rear wheels run over the point where the temporary determination has been made.

Since the pattern comparing means can be shared by the hydroplaning detecting systems according to the first, second, and third embodiments, the hydroplaning detecting systems may be simplified in structure.

Since the hydroplaning detecting system according to the second embodiment compares the pattern of variations of the rotational speed of the front wheels with the pattern of variations of the rotational speed of the rear wheels at the point where the rear wheels run over the point where the temporary determination has been made, the hydroplaning detecting system can accurately determine that the motor vehicle runs over a step or a bump rather than suffering hydroplaning, and hence can reduce detection errors.

Although there have been described what are at present considered to be the preferred embodiments of the invention, it will be understood that the invention may be embodied in other specific forms without departing from the essential characteristics thereof. The present embodiments are therefore to be considered in all respects as illustrative, and not restrictive. The scope of the invention is indicated by the appended claims rather than by the foregoing description.

### Important aspects of the invention as described above can be summarized as follows:

A hydroplaning detecting system for detecting hydroplaning with respect to a motor vehicle has a reference pattern storing unit for storing a predetermined typical reference pattern of variations of the rotational speed of wheels of the motor vehicle when the motor vehicle is suffering hydroplaning, a comparing unit for comparing a pattern of variations of the actual rotational speed of the wheels with the reference pattern supplied from the reference pattern storing means, and generating an output signal indicative of the degree to which the compared patterns are close to each other, and a determining unit for determining that the motor vehicle is suffering hydroplaning if the degree represented by the output signal from the comparing means is in excess of a predetermined threshold.

## Claims

1. A system for detecting hydroplaning with respect to a motor vehicle, comprising:
a reference pattern storing means for storing a predetermined typical reference pattern of variations of the rotational speed of wheels of the motor vehicle when the motor vehicle is suffering hydroplaning;
comparing means for comparing a pattern of variations of the actual rotational speed of the wheels with the reference pattern supplied from said reference pattern storing means, and generating an output signal indicative of the degree to which the compared patterns are close to each other; and
determining means for determining that the motor vehicle is suffering hydroplaning if said degree represented by the output signal from said comparing means is in excess of a predetermined threshold.

2. A system according to claim 1, further comprising:
speed detecting means for detecting the rotational speed of at least two of the wheels of the motor vehicle as said actual rotational speed;
said determining means comprising means for determining that the motor vehicle is suffering hydroplaning based on the output signal from said comparing means depending on the rotational speed detected by said speed detecting means.

3. A system according to claim 2, wherein said speed detecting means comprises a pair of sensors for detecting the rotational speeds, respectively, of left and right front wheels of the motor vehicle;
said determining means comprising difference calculating means for calculating the difference between the degree to which the pattern of variations of the rotational speed of the left front wheel as detected by one of said sensors and said reference pattern are close to each other and the degree to which the pattern of variations of the rotational speed of the right front wheel as detected by one of said sensors and said reference pattern are close to each other, based on the output signal from said comparing means, and means for determining that the motor vehicle is suffering hydroplaning if the difference calculated by said difference calculating means is in excess of a predetermined difference.

4. A system according to claim 2, wherein said speed detecting means comprises a pair of sensors for detecting the rotational speeds, respectively, of front and rear wheels of the motor vehicle;
said determining means comprising means for, if the degree to which the pattern of variations of the rotational speed of the front wheels when the front wheels run over a given point and said predetermined pattern are close to each other is in excess of said predetermined threshold, monitoring the pattern of variations of the rotational speed of the rear wheels when the rear wheels run over said given point for determining whether the motor vehicle is suffering hydroplaning.

5. A system according to claim 4, wherein said determining means comprises means for generating an output signal indicating that the motor vehicle is suffering hydroplaning if the degree to which the pattern of variations of the rotational speed of the rear wheels when the rear wheels run over said given point and said predetermined pattern are close to each other is smaller than a predetermined threshold.

6. A system according to claim 4, wherein said determining means further comprises pattern storing means for temporarily storing the pattern of variations of the rotational speed of the front wheels at the time the degree to which the pattern of variations of the rotational speed of the front wheels when the front wheels run over said given point and said predetermined pattern are close to each other is in excess of said predetermined threshold, and means for comparing said pattern stored in said pattern storing means with the pattern of variations of the rotational speed of the rear wheels when the rear wheels run over said given point, and generating an output signal indicating that the motor vehicle is suffering hydroplaning if the degree to which the compared patterns are close to each other is lower than a predetermined degree.

## Patentansprüche

1. System zum Erfassen von Aquaplaning bei einem Kraftfahrzeug, umfassend:
ein Referenzmusterspeichermittel zum Speichern eines vorbestimmten typischen Referenzveränderungsmusters der Umdrehungsgeschwindigkeit von Rädern des Kraftfahrzeugs, wenn bei dem Kraftfahrzeug Aquaplaning auftritt;
ein Vergleichsmittel zum Vergleichen eines Veränderungsmusters der tatsächlichen Umdrehungsgeschwindigkeit der Räder mit dem Referenzmuster, das von dem ReferenzmusterSpeichermittel bereitgestellt wird und zum Erzeugen eines Ausgangssignals, das den Grad wiedergibt, wie nahe die verglichenen Muster beieinander liegen; und
ein Bestimmungsmittel zum Bestimmen, daß bei dem Kraftfahrzeug Aquaplaning auftritt, wenn der durch das Ausgangssignal von dem Vergleichsmittel repräsentierte Grad über einer vorbestimmten Schwelle liegt.

2. System nach Anspruch 1, ferner umfassend:
ein Geschwindigkeitserfassungsmittel, um die Umdrehungsgeschwindigkeit von wenigstens zwei der Räder des Kraftfahrzeugs als die tatsächliche Umdrehungsgeschwindigkeit zu erfassen;
wobei das Bestimmungsmittel Mittel umfaßt, um - basierend auf dem Ausgangssignal vom Vergleichsmittel, welches von der durch das Geschwindigkeitserfassungsmittel erfaßten Umdrehungsgeschwindigkeit abhängig ist - zu Entscheiden, daß bei dem Kraftfahrzeug Aquaplaning auftritt.

3. System nach Anspruch 2, wobei das Geschwindigkeitserfassungsmittel ein Paar von Sensoren zum Erfassen der Umdrehungsgeschwindigkeiten des linken bzw. rechten Vorderrads des Kraftfahrzeugs umfaßt;
wobei das Bestimmungsmittel ein Differenzberechnungsmittel umfaßt, um die Differenz zwischen dem Grad, wie nahe das Veränderungsmuster der Umdrehungsgeschwindigkeit des linken Vorderrads, wie von einem der Sensoren erfaßt, und das Referenzmuster beieinander liegen, und dem Grad, wie nahe das Veränderungsmuster der Umdrehungsgeschwindigkeit des rechten Vorderrades, wie von einem der Sensoren erfaßt, und das Referenzmuster beieinander liegen, basierend auf dem Ausgangssignal von dem Vergleichsmittel zu berechnen, und Mittel umfaßt, um zu Bestimmen, daß bei dem Kraftfahrzeug Aquaplaning auftritt, wenn die von dem Differenzberechnungsmittel berechnete Differenz über einer vorbestimmten Differenz liegt.

4. System nach Anspruch 2, wobei das Geschwindigkeitserfassungsmittel ein Paar von Sensoren zum Erfassen der Umdrehungsgeschwindigkeit der Vorder- bzw. Hinterräder des Kraftfahrzeugs umfaßt;
wobei das Bestimmungsmittel Mittel umfaßt, um - wenn der Grad, wie nahe das Veränderungsmuster der Umdrehungsgeschwindigkeit der Vorderräder, wenn die Vorderräder über einen bestimmten Punkt fahren, und das vorbestimmte Muster beieinander liegen, über der vorbestimmten Schwelle liegt - das Veränderungsmuster der Umdrehungsgeschwindigkeit der Hinterräder zu überwachen, wenn die Hinterräder über den vorgegebenen Punkt fahren, um zu bestimmen, ob bei dem Kraftfahrzeug Aquaplaning auftritt.

5. System nach Anspruch 4, wobei das Bestimmungsmittel ein Mittel zum Erzeugen eines Ausgangssignals umfaßt, welches anzeigt, daß bei dem Kraftfahrzeug Aquaplaning auftritt, wenn der Grad, wie nahe das Veränderungsmuster der Umdrehungsgeschwindigkeit der Hinterräder, wenn die Hinterräder über den bestimmten Punkt fahren und das vorbestimmte Muster beieinander liegen, kleiner als eine vorbestimmte Schwelle ist.

6. System nach Anspruch 4, wobei das Bestimmungsmittel ferner umfaßt:
ein Musterspeichermittel zum vorläufigen Speichern des Veränderungsmusters der Umdrehungsgeschwindigkeit der Vorderräder zu dem Zeitpunkt, zu dem der Grad, wie nahe das Veränderungsmuster der Umdrehungsgeschwindigkeit der Vorderräder, wenn die Vorderräder über den bestimmten Punkt fahren, und das vorbestimmte Muster beieinander liegen, über der vorbestimmten Schwelle liegt, und Mittel zum Vergleichen des in dem Musterspeichermittel gespeicherten Musters mit dem Veränderungsmuster der Umdrehungsgeschwindigkeit der Hinterräder, wenn die Hinterräder über den bestimmten Punkt fahren, und zum Erzeugen ein Ausgangssignal, welches anzeigt, daß bei dem Kraftfahrzeug Aquaplaning auftritt, wenn der Grad, wie nahe die verglichenen Muster beieinander liegen, unter einem vorbestimmten Grad liegt.

## Revendications

1. Système pour la détection de l'aquaplanage en relation avec un véhicule à moteur, comprenant:
un moyen de mémorisation de profil de référence, pour mémoriser un profil de référence type prédéterminé de variations de la vitesse de rotation de roues du véhicule à moteur lorsque le véhicule à moteur subit un aquaplanage;
des moyens de comparaison pour comparer un profil de variations de la vitesse de rotation réelle des roues au profil de référence fourni par ledit moyen de mémorisation de profil de référence, et pour engendrer un signal de sortie indicatif du degré de rapprochement mutuel des profils comparés; et
des moyens de détermination pour déterminer que le véhicule à moteur subit un aquaplanage si ledit degré représenté par le signal de sortie desdits moyens de comparaison dépasse un seuil prédéterminé.

2. Système selon la revendication 1, comprenant en outre:
des moyens de détection de vitesse pour détecter, en tant que vitesse de rotation réelle, la vitesse de rotation d'au moins deux des roues du véhicule à moteur;
lesdits moyens de détermination comprenant des moyens pour déterminer que le véhicule à moteur subit un aquaplanage sur la base du signal de sortie desdits moyens de comparaison, en fonction de la vitesse de rotation détectée par lesdits moyens de détection de vitesse.

3. Système selon la revendication 2, dans lequel lesdits moyens de détection de vitesse comprennent une paire de capteurs pour détecter respectivement les vitesses de rotation des roues avant gauche et droite du véhicule à moteur;
lesdits moyens de détermination comprenant des moyens de calcul de différence pour calculer la différence entre le degré de rapprochement mutuel du profil de variations de la vitesse de rotation de la roue avant gauche, telle que détectée par l'un desdits capteurs, et dudit profil de référence, et le degré de rapprochement mutuel du profil de variations de la vitesse de rotation de la roue avant droite, telle que détectée par l'un desdits capteurs, et dudit profil de référence, en se fondant sur le signal de sortie desdits moyens de comparaison, et des moyens pour déterminer que le véhicule à moteur subit un aquaplanage si la différence calculée par lesdits moyens de calcul de différence dépasse une différence prédéterminée.

4. Système selon la revendication 2, dans lequel lesdits moyens de détection de vitesse comprennent une paire de capteurs pour détecter respectivement les vitesses de rotation de roues avant et arrière du véhicule à moteur;
lesdits moyens de détermination comprenant des moyens pour, si le degré de rapprochement mutuel du profil de variations de la vitesse de rotation des roues avant, quand les roues avant tournent au-delà d'un point donné, et dudit profil prédéterminé, dépasse ledit seuil prédéterminé, contrôler le profil de variations de la vitesse de rotation des roues arrière quand les roues arrière tournent au-delà dudit point donné, afin de déterminer si le véhicule à moteur subit un aquaplanage.

5. Système selon la revendication 4, dans lequel lesdits moyens de détermination comprennent des moyens pour engendrer un signal de sortie indiquant que le véhicule à moteur subit un aquaplanage si le degré de rapprochement mutuel du profil de variations de la vitesse de rotation des roues arrière, quand les roues arrière tournent au-delà dudit point donné, et dudit profil prédéterminé, est inférieur à un seuil prédéterminé.

6. Système selon la revendication 4, dans lequel lesdits moyens de détermination comprennent, en outre, des moyens de mémorisation de profil pour mémoriser temporairement le profil de variations de la vitesse de rotation des roues avant au moment où le degré de rapprochement mutuel du profil de variations de la vitesse de rotation des roues avant, quand les roues avant tournent au-delà dudit point donné, et dudit profil prédéterminé dépasse ledit seuil prédéterminé, et des moyens pour comparer ledit profil mémorisé dans lesdits moyens de mémorisation de profil au profil de variations de la vitesse de rotation des roues arrière, quand les roues arrière tournent au-delà dudit point donné, et pour engendrer un signal de sortie indiquant que le véhicule à moteur subit un aquaplanage si le degré de rapprochement mutuel des profils comparés est au-dessous d'un degré prédéterminé.
